# EUROPEAN PATENT APPLICATION

(11) **EP 2 037 625 A1**
(43) Date of publication of application: **18.03.2009**
(21) Application number: 07018047.6
(22) Date of filing: 14.09.2007
(51) Int. Cl.: H04L 12/24, H04L 12/56

(54) **Method for protecting a network service**

(71) Applicant: Nokia Siemens Networks Oy, 02610 Espoo (FI)
(72) Inventor: Frantz, Michael, 81737 München (DE)
(74) Representative: Fischer, Michael

(57) **Abstract**

Method for protecting a network service, whereby
- at least one protection method out of a plurality of protection methods for a network service is selected by:

- determining at least one protection method that satisfies the network service's SLA to the required degree,
- determining the cost factors associated with the at least one protection method satisfying the network service's SLA to the required degree,
- determining which protection method out of the plurality of protection methods can be implemented on a transmission route between the network endpoints of the network service,
- selecting the one protection method that satisfies the SLA, is associated with cost factors with the lowest cost and is implementable on said route,
- reserving network resources required by the selected protection method and configuring the network service to be protected at least partly along the route according to the selected method.

## Description

A method for protecting a network service in a network comprising a plurality of data transmission techniques is described.

Transmission networks can employ different technologies for traffic direction, such as SDH (Sychronous Digital Hierarchy), DWDM (Dense Wavelength Division Multiplexing), ASON (Automatically Switched Optical Networks) and Ethernet. One single transmission network may employ several of these technologies. Such a transmission network may be termed a multilayered network.

WO 2003/029986 A1 describes a method for designing low cost static telecommunication networks with failure protection.

One problem to be solved lies in providing a method according to which a network service can be protected in a multilayered network.

A method for protecting a network service is described, whereby at least one protection method for a network service is selected that best fits the network service's SLA (Service Level Agreement). This means that one or all of the SLA's criteria are satisfied.

Protecting a network service is considered to comprise finding alternative routes around a route affected by a disrupted network element, such as a switch, router, link or network card. That is, a protection ensures that in the case of a network failure, a network service still runs.

The SLA is considered to comprise a set of conditions the network service must satisfy, such as, for example, a maximum amount of time during which it is unavailable to a user (maximum downtime), the amount of bandwidth allocated to it or the availability required. The network service's availability requirement may comprise the requirement for protection against SPOF (Single Point of Failure) and / or MPOF (Multiple Points of Failure).

A network service is considered to comprise an entity that establishes a relationship between a customer and a network resource used by the customer. It may contain references to the customer, network elements and a QoS (Quality of Service). Each network service may comprise one or more dedicated transmission paths assigned to it.

According to one implementation of the method, the at least one network protection method automatically protects all services using the network resources which are protected by this protection method. Alternatively, the protection method is dedicated to protecting one specific network service.

The at least one protection method is preferably selected out of a set of protection methods including, for example, ERP (Ethernet Ring Protection), OP (Optical Protection), SNCP (Sub-Network Connection Protection), BSHR (Bidirectional Self Healing Ring), D&C (Drop and Continue), DSR (Dynamic Source Reroute), MSP (Multiple Section Protection), xSTP (Spanning Tree Protocol), card protection, MPLS based protection mechanisms (e.g. for Ethernet and IP), PBB-TE.

The protection method can, according to one implementation of the method, be selected out of a combination of different protection methods, such as those given above.

The proposed method for protecting a network service further comprises determining the cost factors associated with the at least one protection method satisfying the network service's SLA to the conditions which best meet the requirements defined in the SLA. A cost factor is considered to include network resources provided for the protection, such as bandwidth.

Next to determining the necessary cost factors for using the at least one protected method satisfying the network service's SLA, it is also determined which protection method out of the set of protection methods can be implemented on a transmission route between the network endpoints of the network service.

A protection method that satisfies the SLA, is associated with cost factors with the lowest cost and is implementable on the said route can then be selected.

Thereafter, network resources required by the selected protection method satisfying the above conditions can be reserved. The network service to be protected at least partly along the transmission route according to the selected method can then be configured.

One advantage of the proposed method is that CAPEX, Capital Expenditures, are reduced to the use of protection methods costing the least.

Furthermore, OPEX, Operation Expenditures, are reduced according to the proposed method. For example, cumbersome analysis of protection methods depending on a given network topology is avoided.

Moreover, less operator training is required to carry out the method since an appropriate protection method is automatically selected. Detailed knowledge about the multilayer network features is not a requirement for a network operator or administator. In particular, detailed knowledge about the technologies used in a multilayer network, the network topology, protection methods supported by the multilayer transmission network and the network resources usable to configure a service in the network in dependency on protection methods to use, can be avoided.

It is preferred that the network service is not only protected according to the selected protecting method but also according to at least one further protection method already installed along the route for the network service. This has the advantage that double protection in the network, also known as protection on protection, which would incurr higher costs, is avoided by usage of preconfigured protection(s) in the network. That is, pre-installed protection methods along the route for a network service between two endpoints can be reused, so long as they satisfy the criteria of the proposed method.

Several protection methods satisfying the mentioned criteria of low cost, service downtime and resilience against certain types of network failure might be determined. In this case, the protection methods are determined in an order starting with the protection method best satisfying the criteria and ending with the protection method least satisfying the criteria. The protection method best satisfying all criteria is then selected and the network resources correspondingly reserved for its implementation.

Not only can several protection methods be determined that satify the criteria of low cost, service downtime and resilience against certain types of network failure, several protection methods satisfying at least one of the criteria can be determined. In this case, the overall costs of the different determined protection resources required for a protection method are calculated and compared. The protection method best satisfying the relevant criterion can be selected.

A transmission route for the network service can be configured to pass through at least one of an ASON, Ethernet, or SDH domain.

The selection of the protection method sastisfying the described criteria is preferably performed based on TNM (Telecommunications Management Network), comprising a protocol for managing open systems in a communications network. This enables an operator or a configuration system to easily configure end to end network services, whereby a plurality of network elemens within a transmission path for the network service are affected at a time.

One way to define the quality of a network service is via an SLA which can be considered by an operator when the service is configured in the network. The amount of time a service is allowed to be disturbed in case of failure in the network and if a service is to be protected against SPOF or MPOF is one measure of an SLA. Protection requires the reservation of network resources and is thus another aspect considered when honouring an SLA.

Protection methods such as xSTP in Ethernet networks, 1+1 in SDH networks, BSHR, ERP or D&C can restore a network service within different time spans and also require a different amount of network resource. The faster the protection method, the higher the costs and the higher the resilience of the network service against network failures, the higher the costs.

For example, the higher the required resilience for a service against disruption, for example if it is a requirement that downtimes be short and that the network service be protected against high number of network failures, the more network resources are required and the higher are the costs for attaining the desired resilience. More network resources are required because, for example, a higher number of protecting routes or alternative routes must be configurable, including the corresponding bandwidth reserverations, to enable the network service to bypass a failed network element.

In addition, the faster the protection method the more network resources are needed to configure a network service in the network compared to protection methods having lower reaction times. This raises the costs for fast protection methods. This may, however, depend on a given network topology and can be considered for each service.

Further details, examples and drawings of the methods and embodiments described in this document are given below, whereby
- Drawing 1: shows a network consisting of differing domains in which different protocols are used for transmitting endpoint to endpoint network services,
- Drawing 2: shows a network consisting of differing domains in which different transmission protocols are used and and endpoint to endpoint network service is protected by means of xSTP.

Based on the requirements for the availability of a network service, a TMN system can automatically determine the protection methods required to meet the availability requirements for a network service and uses the available network resources in an optimised manner.

For the automatic determination of an appropriate protection method, the TMN system takes the following data into account:
- the SLA which is defined for the network service,
- the different technologies, for example Ethernet, SDH and ASON which can be used to fulfil the network service availability requirements, and
- the cost factors for the different protection techniques of the different technologies which can be defined in the TMN system,
- the network topology,
- the protection methods already configured in the network, for example BSHR, ERP, MSP, protected server trails for re-use and to avoid protection on protection.

Although the above mentioned different technologies are not protection mechanisms per se, they provide protection mechanisms. For example, SDH supports MSP, SNCP and BSHR. Most of the protection switch times are technology dependent.

The following table shows criteria that are considered for the method:

| Protection Method | Protection Switch Time | Expected Cost Factor |
|---|---|---|
| ORP, SDH-SNCP, BSHR, D&C, MSP, card protection, ASON + preconfigured restoration | <= 50 ms | High (e.g. 3) |
| ERP | >= 200 ms, depending on the realisation of the ERP | Medium (e.g. 2) |
| ASON + DSR | >= 200 ms, depending on the realisation of the control plane (GMPLS) and the network topology | Medium (e.g. 2) |
| xSTP | Between seconds and minutes, depending on the xSTP method used and the size of the routing tables which have to be built up after a network failure | |

The protection switch time is the time needed for the network service to bypass a network element with a network failure. It may also be termed service restoration time. This may be the time necessary to activate an alternative route with or without a Spanning Tree associated with it. It may also be the time required to re-allocate network resources to the network service, such as altering the bandwidth usable by the service.

The following operational scenario is preferrably implemented:
- An operator defines a network service in the TMN system by defining the endpoints and the SLA of the network service;
- the operator performs a service creation function. After this, the TMN system automatically performs the steps described below in detail and offers the operator the result;
- in dependence on the result, the operator can activate the service, that is, configure the service in the network or halt the service creation.

After the operator has defined the network service and its attributes such as its endpoints and the SLA in the TMN system, a process which may include the definition of further attributes such as availability requirements for the service or customer data, the TMN system begins with the following:

Analysis of the SLA. Here, the TMN sytem identifies the protection method required and whether the service has to be protected against types of network failures such as SPOF or MPOF.

Identification of protection methods. Here, the TMN system performs the following analysis:
a. Identification of the order of the protection methods which can be used to fulfil the SLA's requirements and cause the least CAPEX. The first entry in the ordered list of suitable methods is the protection method with the least CAPEX, followed by the protection method with the next least CAPEX and so on.
b. Checking as to whether a service is to be protected against a specific type of network failure, such as SPOF or MPOF. Here, the protection methods ordered according to
a. are reduced to the protection methods which fulfill the requirements concering type of network failure.

Regarding a., by way of example, the protection switch time may be >= 1 minute. In this case, DSR is the first choice as a protection method, following by ERP as second and SDH-SNCP as third choice.

Where the protection switch time requirement is <= 1 minute, ERP would be the first choice with SDH-SNCP and SDH-SNCP-D&C, ASON with preconfigured restoration and ASON with preconfigured restoration and DSR being the second choice and third choices, respectively. It should be noted that Ethernet and ASON + DSR are not considered anymore to be able to guarantee the required service protection switch time.

Concerning b., by way of example, the protection switch time requirement may be <= 1 minute in the case of an MPOF disruption. In this case, ERP with a shared link is the first choice and one of SDH-BSHR with dual interconnected rings, SDH-SNCP-D&C and ASON with preconfigured restoration + DSR is the second choice.

Once the appropriate protection method satifying protection switch time, resilience against a type of failure and the least CAPEX has been identified, the route of the service is preferably determined.

The results of the protection requirement analysis can be advantageously used as routing constraints for an automatic router for the network service, whereby the automatic router can be an element of a TMN system. The automatic router checks if the selected protection method, for example ERP, is available end to end in the network. If not, the automatic router changes the protection method according to the determined order until the availability requirements for the service are met and the corresponding protection method is implementable in the route.

When an alternative route bypassing the network failure is setup, protection methods already configured in the multilayer network are identified and reused by the automatic router to avoid protection on protection. That is, the identified protection methods are mixed with protection methods which are already configured in the network and also fulfill the protection requirements.

The automatic router identifies all possible active routes for all technologies which support the availability requirements of the service. This is used for a final check delineated below. However, if no route can be found which fulfills the requirements defined in the SLA, a warning is given to the operator that the required resources are not available and offers the solution which fits best. Here the protection method most nearly satisfying the cost, downtime and type of network failure resistance criteria is suggested.

In the case the automatic router is used for endpoint to endpoint or for hybrid routing, a final check identifies the overall costs of all identified protection methods which fulfill the protection requirements defined in the SLA. The overall costs comprise the sum of resources which are required to establish the protection in the network. For example, it may be that a protection technology, at a first glance, appears to be the cheaper solution, however due to circumstances such as network utilization, that it may need a long route and therefore more resources compared to another protection mechanism, the latter normally being more expensive but in this case requiring less resources. This may be because the 'ideal' route can be used or already preconfigured protection mechanisms can be used. Thus, the determination of which protection method offers the cheapest solution is preferably only decided when the final routes for all possible protection mechanisms are evaluated and compared with one another. The results of this analysis can be used to define the resources which are required to setup the network service in a protected manner in the network.

The CAPEX of all network resources required for the different protection methods is summed up and compared to the overall CAPEX.

By comparison of the overall CAPEX for the identified protection methods, it is ensured that not only the protection method selected according to the cost factors defined in the TMN system is used, but that also the network resources which are finally required to setup the network service with the required protection are selected.

Alternatively, a manual routing wizard can be employed, whereby the wizard only offers the operator the resources for the protection methods which fulfil the availability requirements of the network service, that is, the wizard filters the network resources which can be used for the manual routing process in advance. The user may change the view, i.e. change the filter. It is the responsibility of the user / operator to decide which protection methods to use. That is, the operator receives from the wizard an optimised network view which shows the reduced network resources which can be used to meet the availability requirements.

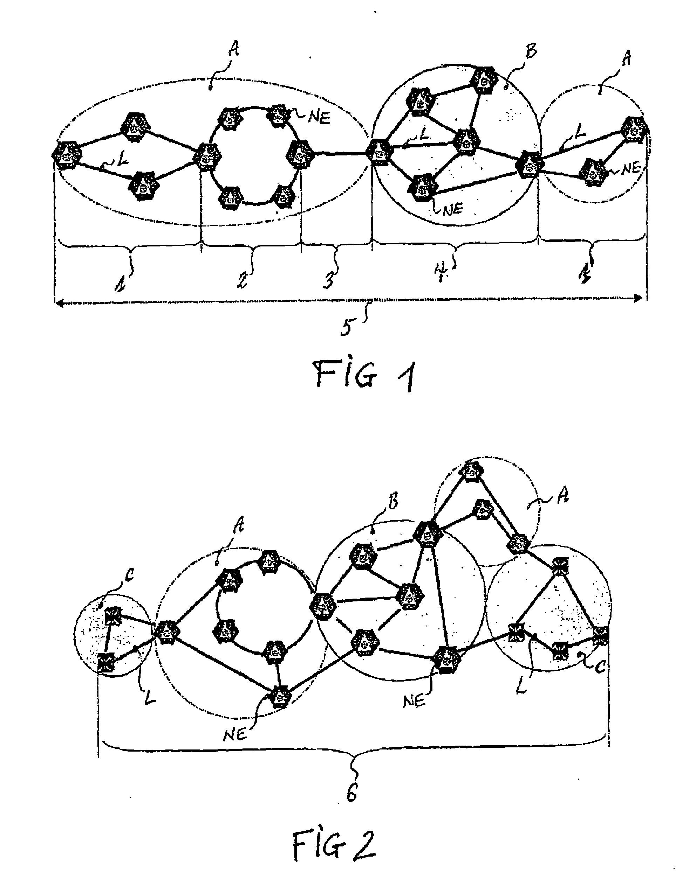

Figure 1 shows a multilayer transmission network consisting of the resources used with the transmission methods SDH along with SDH used for an ASON domain. The part of the network configured according to SDH is denoted with the symbol A; the part of the network configured according to SHD for an ASON is denoted with the symbol B. Each sector A or B of the network comprises a plurality of network elements NE and L, whereby NE denotes routers and switches L denotes links between these.

In the SLA for the service to be configured in the network as shown in Figure 1, it is defined that the restoration time for the network service (protection switch time) be less than or equal to 50 ms and that the service should be protected against SPOF.

Several protection mechanisms active in the network are shown. SNCP is denoted with 1, BSHR with 2, MSP with 3, ASON with a preconfigured restoration with 4. The end to end network service passing is denoted with symbol 5.

A TMN system identifies SDH as the technology, that is, SNCP as a corresponding protection method which fulfils these requirements according to the proposed method. Even if this is the technology that would normally cause the highest costs, it is used due to the required switching time of <= 50 ms. Already configured network protection, i.e. BSHR 1 and MSP 3 in this example, are identified and reused to avoid protection on protection. MSP and BSHR are network protection mechanisms which can be automatically used for all services traversing the corresponding network resources and are preferably carefully planned by the carrier.

Referring again to Figure 1, there is one SPOF possible which can cause the service to fail. This is possible at the network element bordering the sectors where SNCP and BSHR are used as protection methods. In this case, it may be that no route bypassing the network disrupted network element can be found. However, in the case that there is an alternative route available, the SNCP is connected to the BSHR at 2 different network elements using a D&C scheme.

Network elements at which the endpoints of the network service are located are possible sources of defects at which an SPOF can disconnect a service. However, this type of failure can only be partly protected, by means of card protection, for example. However, protected cards are also considered with the methods proposed in this document. Card protection comprises a redundancy scheme according to which when one network card fails, another network will take over handling the network traffic.

Figure 2 shows a multilayer transmission network consisting of the resources used with the transmission methods Ethernet, SDH and SDH used for an ASON domain. The part of the network configured according to SDH is denoted with the symbol A; the part of the network configured according to SHD for an ASON is denoted with the symbol B. Additional sectors C are shown which consist of resources used for Ethernet based transmission. Each sector A, B and C of the network comprises a plurality of network elements NE and L.

In the SLA for the network service to be configured in the network shown in Figure 2, it is defined that the restoration time (protection switch time) can be >= 1 minute and that the service should be protected against MPOF. The TMN system identifies xSTP as the method which fulfills these requirements and which would cause the least costs. Therefore the TMN system will select and implement the use of xSTP for the protection method. Symbol 6 denotes xSTP as the selected protection method and spans the all sectors A, B and C.

### List of Abbreviations

- A: network sector in which SDH is used as a data transmission protocol
- B: network sector in which SDH for ASON (Automatically Switched Optical Networks) is used as a data transmission protocol
- C: network sector in which Ethernet is used as a data transmission protocol

- NE: router, switch or other network element
- L: link or transmission channel

- 1: SNCP protection method
- 2: BSHR protection method
- 3: MSP protection method
- 4: ASON with or without preconfigured restoration
- 5: end to end network service
- 6: xSTP protection method

## Claims

1. Method for protecting a network service, whereby
- at least one protection method out of a plurality of protection methods (1, 2, 3, 4, 6) for a network service is selected by:
- determining at least one protection method that satisfies the network service's SLA to the required degree,
- determining the cost factors associated with the at least one protection method satisfying the network service's SLA to the required degree,
- determining which protection method out of the plurality of protection methods can be supported on a transmission route between the network endpoints of the network service,
- selecting one protection method that satisfies the SLA, is associated with cost factors with the lowest cost and is implementable on said route,
- reserving network resources required by the selected protection method and configuring the network service to be protected at least partly along the transmission route according to the selected method.

2. Method according to claim 1, whereby the network service is protected according to the selected method and at least one further protection methods (1, 2, 3, 4, 6) already installed along the route.

3. Method according to one of claims 1 or 2, wherein the protected method is selected out of at least one of the following methods: ERP, OP, SNCP, BSHR, D&C, DSR, MSP, xSTP, card protection, MPLS based protection mechanisms (e.g. for Ethernet and IP), PBB-TE.

4. Method according to one of the preceding claims, whereby a transmission route for the network service may pass through at least one ASON domain (B).

5. Method according to one of the preceding claims, whereby a transmission route for the network service may pass through at least one Ethernet network (C).

6. Method according to one of the preceding claims, whereby a transmission route for the network service may pass through through at least one SDH network (A).

7. Method according to one of the preceding claims, whereby the network service's SLA comprises at least one of the following types of protection required: protection against SPOF, protecting against MPOF.

8. Method according to one of the preceding claims, whereby the network is configured by a TMN system.
